# EUROPÄISCHE PATENTANMELDUNG

(11) **EP 2 256 384 A2**
(43) Veröffentlichungstag der Anmeldung: **01.12.2010**
(21) Anmeldenummer: 10163408.7
(22) Anmeldetag: 20.05.2010
(51) Int. Cl.: F16K 3/02, F16K 31/00

(54) **Drosselventil für flüssige und/oder gasförmige Stoffe**

(30) Priorität: 28.05.2009 DE 102009026554
(71) Anmelder: Robert Bosch GmbH, 70442 Stuttgart (DE)
(72) Erfinder: Dukart, Anton, 70839, Gerlingen (DE); Boedeker, Hendrik, 71229, Leonberg/Hoefingen (DE)

(57) **Zusammenfassung**

Die Erfindung betrifft ein Drosselventil (1) für flüssige und/oder gasförmige Stoffe, mit mindestens einem zum Freigeben oder Verschließen einer Ventilöffnung (4) verlagerbaren Ventilelement (7) und mit mindestens einem das Ventilelement (7) verlagernden Piezo-Aktor (11 ,21). Hierbei ist vorgesehen, dass das Ventilelement (7,19) zumindest im Wesentlichen quer zu der Ventilöffnung (4) verlagerbar ist.

## Beschreibung

Die Erfindung betrifft ein Drosselventil für flüssige und/oder gasförmige Stoffe, mit mindestens einem zum Freigeben oder Verschließen einer Ventilöffnung verlagerbaren Ventilelement und mit mindestens einem das Ventilelement verlagernden Piezo-Aktor.

### Stand der Technik

Auf Gas basierende Antriebstechniken im Kraftfahrzeugbereich spielen zunehmend eine bedeutende Rolle. Durch geeignete Ventile und verwandte Komponenten müssen der Gasdruck und andere Größen dem Bedarf angepasst werden. Wobei die modernen Ventile in der Lage sein müssen, auf schneller Zeitskala eine große dynamische Spanne von Anforderungen abzudecken. Drosselventile der eingangs genannten Art sind bekannt. Insbesondere bei Kraftstoff-Einspritzsystemen sind Drosselventile bekannt, bei denen ein durch einen Piezo-Aktor verlagerbares Ventilelement in Form einer Ventilnadel eine Ventilöffnung freigibt oder verschließt, indem die Ventilnadel koaxial zu der Ventilöffnung beziehungsweise in Richtung des Stoffflusses durch die Ventilöffnung verlagert wird, und dadurch den Volumen- beziehungsweise Massenstrom durch die freigegebene Ventilöffnung sowie die Drücke vor und hinter der Ventilöffnung bestimmt. Entsprechende Drosselventile sind auch für gasförmige Stoffe bekannt.

Nachteilig ist, dass derartige Drosselventile nur in kleinen Bereichen in Bezug auf die einzustellenden Drücke beziehungsweise den einzustellenden Volumen- beziehungsweise Massenstrom beschränkt sind und darüber hinaus kostenintensiv in der Herstellung sind.

### Offenbarung der Erfindung

Erfindungsgemäß ist vorgesehen, dass das Ventilelement zum Freigeben oder Verschließen der Ventilöffnung zumindest im Wesentlichen quer zu der Ventilöffnung, oder mit anderen Worten quer zu dem wesentlichen Stofffluss durch die Ventilöffnung verlagerbar ist. Anders als im Stand der Technik erfolgen somit die Schließ- und Öffnungsbewegung des Ventilelements im Wesentlichen orthogonal beziehungsweise senkrecht zu dem im Wesentlichen durch die Ventilöffnung strömenden Volumen. Zum Einen kann dadurch das Drosselventil kostengünstig hergestellt werden und zum Anderen kann auf diese Art und Weise eine besonders präzise Einstellung der Drücke vor und hinter der Ventilöffnung sowie des durch die Ventilöffnung strömenden Volumens gewährleistet werden. Das Ventilelement wird dabei quer über die Ventilöffnung mittels des Piezo-Aktors verschoben.

Zweckmäßigerweise ist das Ventilelement dabei als ebene Ventilplatte ausgebildet. Diese liegt bevorzugt auf einer ebenen Oberfläche einer Führungswand auf, in welcher auch die Ventilöffnung ausgebildet ist. Dadurch lässt sich ein dichtes Verschließen der Ventilöffnung gewährleisten. Bevorzugt ist die Ventilplatte zumindest im Wesentlichen aus Metall gefertigt. Dies gewährleistet eine ausreichende Stabilität des Drosselventils sowie eine entsprechende Lebensdauer. Das Drosselventil weist vorteilhafterweise weitere Führungsmittel für die Ventilplatte auf, sodass diese auf einer bestimmten Bahn mittels des Piezo-Aktors verschiebbar ist, um das präzise Einstellen zu gewährleisten. Zweckmäßigerweise sind die Führungsmittel als die Ventilöffnung aufweisende Führungswände ausgebildet, zwischen denen die Ventilplatte einliegt. Die Ventilplatte ist somit bevorzugt zwischen mindestens zwei Führungswänden gleitend gelagert. Weitere Führungswände können zusätzlich seitlich zu der Ventilplatte als Führungswände der Ventilplatte zur Führung dienen.

Es ist also vorgesehen, dass in den Führungswänden die Ventilöffnung ausgebildet ist. Jede der gegenüberliegenden Führungswände, zwischen denen die Ventilplatte verlagerbar ist, weist dazu eine Öffnung auf, wobei die Öffnungen zweckmäßigerweise koaxial zueinander angeordnet sind. Zusammen bilden die Öffnungen die Ventilöffnung des Drosselventils. Die Führungsseitenwände des Drosselventils verschließen den Raum zwischen den Führungswänden zur Seite hin, sodass der durch die eine Öffnung einströmende flüssige oder gasförmige Stoff auch vollständig durch die andere Öffnung wieder heraustritt und keine Volumen- beziehungsweise Masseverluste entstehen. Durch das Verlagern der Ventilplatte zwischen den Führungswänden, die die Ventilöffnung aufweisen beziehungsweise bilden, können mittels des Drosselventils hohe Druckdifferenzen zwischen den Bereichen vor (Hochdruckbereich) und hinter (Niederdruckbereich) der Ventilöffnung - in Strömungsrichtung gesehen - realisiert beziehungsweise mittels des Piezo-Aktors eingestellt werden.

Damit die metallische Ventilplatte auch noch bei hohen Druckdifferenzen problemlos verlagerbar ist, weist wenigstens eine der Führungswände eine der Ventilplatte zugeordnete Polymerschicht auf. Besonders bevorzugt weist zumindest die Führungswand eine der Ventilplatte zugeordnete Polymerschicht auf, gegen welche die Ventilplatte aufgrund der Druckdifferenz gedrückt wird. Die Kombination aus Polymerschicht und metallischer Ventilplatte ermöglicht eine besonders reibarme Relativbewegung zwischen den beiden Elementen, wodurch der Verschleiß vermindert wird. Darüber hinaus erhöht die Polymerschicht die Dichtheit des Drosselventils.

Nach einer Weiterbildung der Erfindung weist die Ventilöffnung - in Bewegungsrichtung des Ventilelements gesehen - eine konstante Weite auf. So ist die Ventilöffnung beispielsweise quadratisch oder rechteckig ausgebildet und entsprechend zu der Bewegungsrichtung der Ventilplatte beziehungsweise des Ventilelements ausgerichtet.

Alternativ ist vorgesehen, dass die Weite der Ventilöffnung - in Bewegungsrichtung des Ventilelements gesehen - variiert. Hierdurch ist es auf besonders einfache Art und Weise möglich, einen größeren Spielraum für unterschiedliche Druckdifferenzen/Strömungsvolumen zu erhalten. Ist die Ventilöffnung beispielsweise dreieckförmig ausgebildet und derart ausgerichtet, dass sich die Weite der Ventilöffnung beim Verschließen (also in Schließbewegungsrichtung des Ventilelements) verkleinert, können kleine Volumenströme beziehungsweise hohe Druckdifferenzen besonders präzise eingestellt werden, wobei durch das weitere Öffnen des Drosselventils eine grobe Einstellung erfolgt. Natürlich kann die Ausgestaltung der Ventilöffnung auch genau spiegelverkehrt zu der oben beschriebenen ausgebildet sein. Denkbar ist natürlich auch eine diskontinuierliche Weitenveränderung der Ventilöffnung über ihre Längserstreckung hinweg.

Nach einer Weiterbildung der Erfindung ist vorgesehen, dass dem Piezo-Aktor ein zweiter Aktor, insbesondere ein Magnet-Aktor zugeordnet ist, der zum Verlagern des Piezo-Aktors dient. Dadurch lässt sich das Ventilelement nicht nur über einen weiteren Bereich verlagern, sondern insbesondere auch die Einstellzeit verkürzen, sodass auch auf einer schnellen Zeitskala die Einstellung des Drosselventils schnell und präzise an den Bedarf angepasst werden kann. Der Magnet-Aktor bildet diesbezüglich ein besonders geeignetes Mittel. Natürlich sind jedoch auch andere Aktoren (pneumatisch, hydraulisch und/oder elektromotorisch) denkbar.

Ferner ist vorgesehen, dass das Drosselventil ein zweites Ventilelement zum Freigeben oder Verschließen der Ventilöffnung aufweist. Das Ventilelement kann dabei wie oben beschrieben ausgebildet sein. In einer bevorzugten Ausführungsform ist das zweite Ventilelement gegenüber dem ersten Ventilelement angeordnet, sodass es die Ventilöffnung von der anderen/gegenüberliegenden Seite kommend verschließt. Auch dem das zweite Ventilelement verlagernden Piezo-Aktor kann ein zweiter Aktor, insbesondere ein zweiter Magnet-Aktor zugeordnet sein. Ist die Weite der Ventilöffnung - in Bewegungsrichtung des Ventilelements beziehungsweise in ihrer Längserstreckung gesehen - variierend ausgebildet, so ergeben sich eine Vielzahl von möglichen Einstellungen, die mittels der zwei Ventilelemente und der zugehörigen Piezo-Aktoren schnell und präzise einstellbar sind.

Vorteilhafterweise weist das Drosselventil mindestens einen Sensor zur Regelung der Stellung des Ventilelements in Abhängigkeit eines durch den Sensor erfassten Drucks, insbesondere in einem Niederdruckbereich des Ventils, auf.

Schließlich ist vorgesehen, dass die Querschnittsfläche der Ventilöffnung derart gewählt ist, dass bei minimalem Druck im Hochdruckbereich des Drosselventils ein maximal benötigter Volumenstrom durch die vollständig freigegebene Ventilöffnung gewährleistet ist. Mit anderen Worten soll die Querschnittsfläche der Ventilöffnung der Fläche entsprechen, die bei einem minimalen Druck im Hochdruckbereich des Drosselventils, beispielsweise bei einem minimalen Tankdruck, den maximal benötigten Massenstrom liefert. Dadurch ist jederzeit eine ausreichende Versorgung gewährleistet.

Im Folgenden soll die Erfindung anhand einiger Ausführungsbeispiele näher erläutert werden. Dazu zeigen
- Figur 1: ein erstes Ausführungsbeispiel der Erfindung in einer schematischen Darstellung,
- Figur 2: eine vorteilhaft gestaltete Ventilöffnung in einer schematischen Darstel- lung,
- Figur 3: ein zweites Ausführungsbeispiel in einer schematischen Darstellung,
- Figur 4: ein drittes Ausführungsbeispiel in einer schematischen Darstellung.

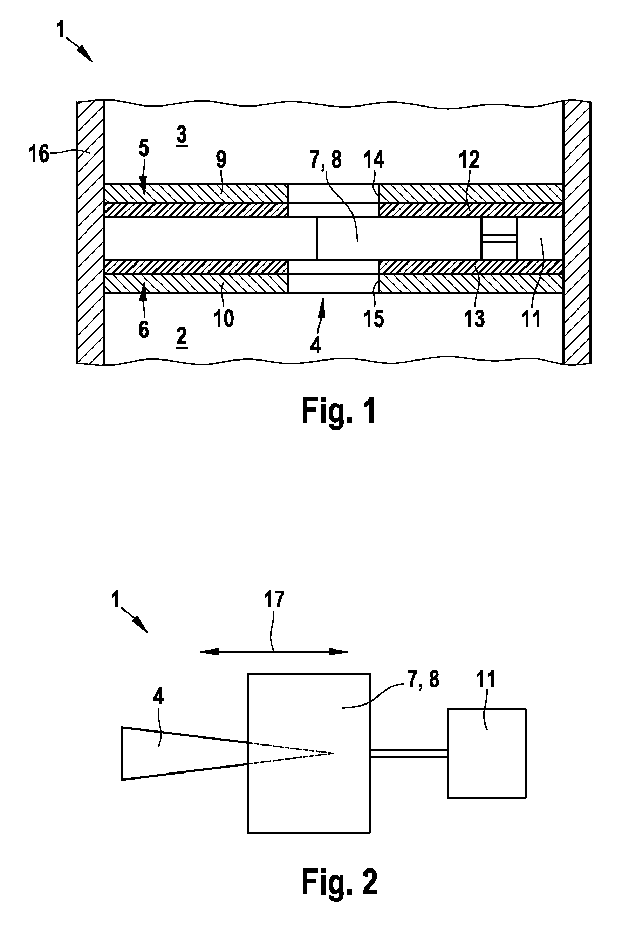

Die Figur 1 zeigt in einer schematischen Darstellung ein erstes Ausführungsbeispiel eines vorteilhaften Drosselventils 1 für flüssige und/oder gasförmige Stoffe. Das Drosselventil 1 weist einen Hochdruckbereich 2 sowie einen Niederdruckbereich 3 auf, die mittels einer Ventilöffnung 4 miteinander verbindbar sind. Die Ventilöffnung 4 ist dabei als zwei koaxial zueinander angeordnete Öffnungen 14, 15 ausgebildet, die in zwei den Hochdruckbereich 2 von dem Neiderdruckbereich 3 trennenden Wänden ausgebildet sind. Zwischen den beiden Wänden 5 und 6 ist ein Ventilelement 7, das als Ventilplatte 8 ausgebildet ist, zum Verschließen oder Freigeben der Ventilöffnung 4 gleitend gelagert. Die Wände 5 und 6 sind vorteilhafterweise zumindest im Wesentlichen aus Metall gefertigt und dienen hierbei als Führungswände 9 und 10. Das Ventilelement 7 beziehungsweise die Ventilplatte 8 ist dabei ebenfalls zumindest im Wesentlichen aus Metall gefertigt und durch einen Piezo-Aktor 11 verlagerbar. Der Piezo-Aktor 11 ist dazu fest zwischen den Wänden 5 und 6 angeordnet.

Die Führungswände 9 und 10 weisen auf ihrer dem Ventilelement beziehungsweise der Ventilplatte 8 zugewandten Seite jeweils eine Polymerschicht 12 beziehungsweise 13 auf. Die Polymerschichten 12 und 13 gewährleisten die Dichtheit des Drosselventils 1 und verringern die Reibung zwischen der Ventilplatte 8 und den Führungswänden 9 und 10.

Durch Ansteuern des Piezo-Aktors 11 kann nunmehr die Ventilöffnung 4 freigegeben oder verschlossen werden. Durch das Verlagern des Ventilelements 7 quer zu der Ventilöffnung 4 sind nur geringe Stellkräfte für den Piezo-Aktor erforderlich, wodurch auch kleinere Ansprechzeiten zur Verfügung stehen, sodass besonders schnell auf eine Bedarfsänderung reagiert werden kann. Darüber hinaus führt die Verlagerung quer zu der Ventilöffnung 4 auch dazu, dass eine Geräuschentwicklung im Vergleich zu bekannten Drosselventilen, bei denen das Ventilelement in Richtung des Volumen-/Massenstroms bewegt wird, reduziert wird beziehungsweise gering ausfällt. Außerdem ist das so gestaltete Drosselventil 1 besonders robust. Das Ventilelement 8 ist fest zwischen den Führungswänden 9 und 10 gehalten. Ein ungewolltes Öffnen durch eine zu hohe Druckdifferenz kann beispielsweise nicht erfolgen.

Die Figur 2 zeigt eine schematische Draufsicht auf das Drosselventil 1 aus der Figur 1, wobei hier lediglich die Ventilöffnung 4, das Ventilelement 7 sowie der Piezo-Aktor 11 dargestellt sind.

Die Figur 2 zeigt eine besonders vorteilhafte Ausgestaltung des Drosselventils 1, bei der die Weite der Ventilöffnung 4 über ihre Längserstreckung, also in Bewegungsrichtung des Ventilelements 7 beziehungsweise der Ventilplatte 8 gesehen, variiert. Mit anderen Worten wird der Ventilöffnung 4 eine Form gegeben, bei der die Öffnungsweite nicht konstant mit dem Stellwert variiert. Auf diese Weise ist die Drossel- beziehungsweise Querschnittsfläche der Ventilöffnung 4 gerade das Integral der Öffnungsweite entlang des Stellwegs und kann so beliebige Funktionen realisieren. Als Konsequenz kann beispielsweise der Massendurchfluss bei kleinen Öffnungsweiten fein geregelt werden, bei größeren Öffnungsweiten gröber. In dem dargestellten Ausführungsbeispiel der Figur 2 weist die Ventilöffnung einen keil- beziehungsweise dreieckförmigen Querschnitt auf, der in Bewegungsrichtung des Ventilelements 7 ausgerichtet ist. Die Querschnittsform der Öffnungen 14, 15 entspricht dabei selbstverständlich der Querschnittsform der Ventilöffnung 4. Je nachdem an welcher Stelle sich die Ventilplatte 8 über beziehungsweise an der Ventilöffnung 4 befindet, wird dadurch bei einem gleich großen Verstellweg die Querschnittsfläche der Ventilöffnung 4 um einen unterschiedlich großen Betrag verändert. Die Bewegungsrichtung des Ventilelements 7 beziehungsweise der Ventilplatte 8 ist dabei durch einen Doppelpfeil 17 angedeutet. Die Querschnittsform der Ventilfläche 4 kann beliebig, den Anforderungen entsprechend gewählt werden. So ist es auch denkbar, dass die Querschnittsfläche über die Längserstreckung der Ventilöffnung 4 hinweg diskontinuierlich variiert und dazu beispielsweise eine Stufenform aufweist. Ebenso sind kreisförmige und/oder elliptische Ventilöffnungen denkbar.

Aus dem Niederdruckbereich 3 fließt im Betrieb beispielsweise permanent ein variabler Massen- beziehungsweise Volumenstrom ab. Das Drosselventil 1 hat die Aufgabe, den Druck im Niederdruckbereich 3 auf einem konstanten Wert zu halten. Zur Erfassung des Niederdruck-Werts ist vorteilhafterweise ein entsprechender Drucksensor im Niederdruckbereich 3 vorgesehen. Der Sensor ist zweckmäßigerweise mit dem Piezo-Aktor 11 elektrisch wirkverbunden, sodass eine besonders schnelle Regelung beziehungsweise Einstellung des Drosselventils 1 erfolgen kann.

Vorteilhafterweise weist die Ventilöffnung 4 eine Querschnittsfläche auf, die derart gewählt ist, dass auch bei minimalem Druck im Hochdruckbereich 2 ein maximal benötigter Massen- beziehungsweise Volumenstrom durch die Ventilöffnung 4 gewährleistet wird. Die Positionierung der Ventilplatte 8 erfolgt durch den Piezo-Aktor 11 in festgelegter Richtung. Dazu sind neben den Führungswänden 9 und 10 auch noch Führungsseitenwände - hier nicht dargestellt - vorgesehen. Auch die Führungsseitenwände weisen vorteilhafterweise eine Polymer-Schicht zur Gewährleistung der Dichtheit sowie zur Verringerung von Reibung auf. Insgesamt kann das Drosselventil 1 jede beliebige Außenkontur aufweisen. Eine entsprechend geformte Wand 16 bildet dazu die Außenseite des Drosselventils 1.

Nach der bekannten Drossel-Formel ist der durch die Ventilöffnung 4 freigegebene Massenstrom/Volumenstrom proportional zum Produkt aus Druckdifferenz und Drosselfläche. So ergibt sich beispielsweise für einen benötigten Massenstrom zwischen cirka 0,02 g/s und 2 g/s sowie bei einem benötigten Enddruck zwischen 2 und 10 bar, dass die freigegebene Querschnittsfläche der Ventilöffnung 4 über drei bis vier Größenordnungen variieren können muss. Das oben beschriebene Drosselventil erlaubt eine derartige Einstellung auch innerhalb kürzester Zeit (cirka 1 ms).

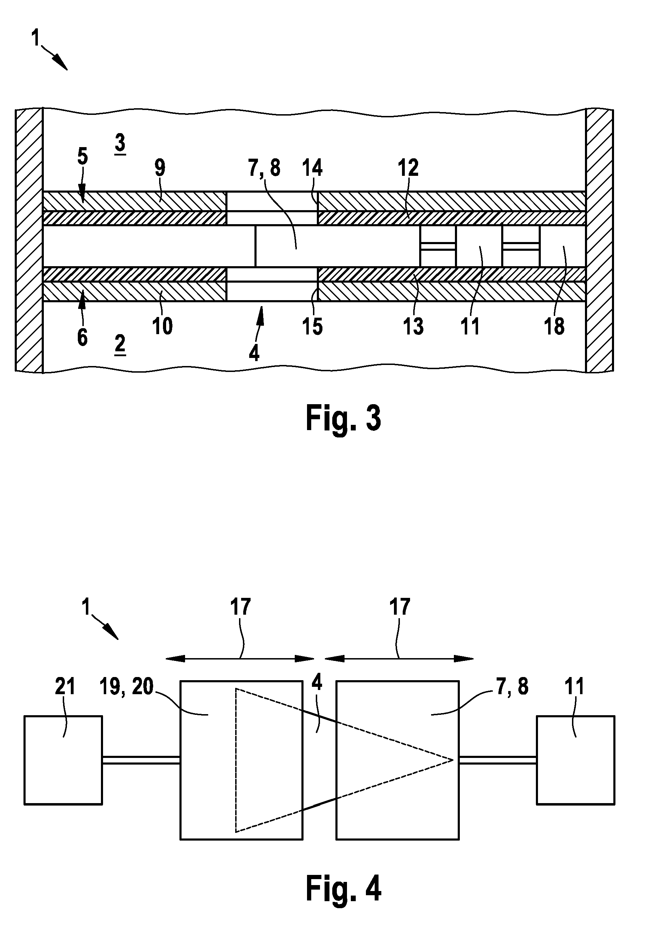

Die Figur 3 zeigt eine erweiterte Ausführungsform des Drosselventils 1 aus der Figur 1. Bekannte Elemente sind dabei mit den gleichen Bezugszeichen versehen, sodass insofern auf die oben stehende Beschreibung verwiesen wird. Im Unterschied zu dem vorhergehenden Ausführungsbeispiel weist das Drosselventil 1 der Figur 3 zusätzlich zu dem Piezo-Aktor 11 einen weiteren Aktor 18 auf, der dem Piezo-Aktor 11 zugeordnet und vorgeschaltet ist. Der Aktor 18 ist vorteilhafterweise auf größere Stellweiten als der Piezo-Aktor 11 ausgelegt, um die Stellgeschwindigkeit des Drosselventils 1 wesentlich zu erhöhen. Besonders bevorzugt ist der Aktor 18 als Magnet-Aktor ausgebildet. Dieser bewirkt im Betrieb eine Grob-Regulierung der Öffnungsweite der Ventilöffnung 4 auf schneller Zeitskala. Der präzisiere Piezo-Aktor 11 dagegen ist für die Fein-Regulierung zuständig. Prinzipiell ist es denkbar, die Steuerung der beiden Aktoren 11 und 18 sowohl über ein Kennfeld als auch über eine Rückkopplung mit Messsonden durchzuführen.

Die Figur 4 zeigt in einer weiteren schematischen Draufsicht auf das Drosselventil 1 eine vorteilhafte Weiterbildung, die sowohl als Ergänzung zu dem Ausführungsbeispiel der Figur 1 als auch zu dem der Figur 3 vorgesehen werden kann. Im Wesentlichen entspricht die Darstellung der Darstellung der Figur 2. Sie unterscheidet sich lediglich dahingehend, dass ein zweites Ventilelement 19, ausgebildet als Ventilplatte 20, vorgesehen ist. Die Ventilplatte 20 ist ebenfalls zwischen den Führungswänden 9 und 10 sowie den nicht dargestellten Führungsseitenwänden gleitend gelagert. Der Ventilplatte 20 ist darüber hinaus ein entsprechender zweiter Piezo-Aktor 21 zugeordnet, der zum Verlagern beziehungsweise Steuern der Ventilplatte 20 dient. Die Piezo-Aktoren 11 und 21 sowie die Ventilplatten 8 und 20 sind dabei derart angeordnet, dass die Ventilplatten 8 und 20 auf der gleichen Achse verlagerbar/verfahrbar sind und dabei spiegelbildlich gegenüberliegen. Dadurch kann die Ventilöffnung 4 von zwei Seiten gleichzeitig beeinflusst beziehungsweise der freigegebene Querschnitt eingestellt werden. Der Ventilöffnung 4 selbst ist dabei wiederum keilförmig, wie oben beschrieben, ausgebildet. Natürlich sind auch hier andere Querschnittsformen denkbar. Im vorliegenden Ausführungsbeispiel dient eine der Ventilplatten 8, 20 dazu, einen "Arbeitspunkt" festzulegen, das heißt eine Bezugsöffnungsweite für die Drosselfläche beziehungsweise für die freigegebene Querschnittsfläche der Ventilöffnung 4. Ausgehend von diesem Punkt beziehungsweise dieser Einstellung wird über die zweite Ventilplatte 20, 8 die gewünschte Drosselfläche beziehungsweise freigegebene Querschnittsfläche der Ventilöffnung 4 eingestellt. Das derartig ausgebildete Drosselventil 1 erlaubt auf einfache Art und Weise zahlreiche Einstellungsmöglichkeiten für den Massen- beziehungsweise Volumenstrom. Insbesondere erlaubt diese Ausbildung eine schnelle Einstellung der gewünschten Drosselfläche.

In einer nicht dargestellten Weiterführung sind beiden Piezo-Aktoren 11 und 21 jeweils ein Magnet-Aktor - entsprechend dem Ausführungsbeispiel der Figur 3 - zugeordnet, um eine noch schnellere Einstellung der Drosselfläche zu gewährleisten.

Insgesamt erlaubt das vorteilhafte Drosselventil 1 in jeder der beschriebenen Ausführungsformen eine schnelle und präzise Einstellung der gewünschten Drosselfläche. Bevorzugt weist das Drosselventil 1 dabei einen Sensor auf, der in dem Niederdruckbereich 3 angeordnet ist, sodass eine besonders schnelle präzise Regulierung der Drosselfläche erfolgen kann. Durch die oben beschriebenen Ausführungsformen des Drosselventils 1 ist es möglich, dieses bauraumoptimiert und kosteneffizient herzustellen. Darüber hinaus weist es eine hohe Dichtheit sowie Robustheit auf, und kann auch in geräuschsensitiven Anwendungen verwendet werden.

## Patentansprüche

1. Drosselventil (1) für flüssige und/oder gasförmige Stoffe, mit mindestens einem zum Freigeben oder Verschließen einer Ventilöffnung (4) verlagerbaren Ventilelement (7) und mit mindestens einem das Ventilelement (7) verlagernden Piezo-Aktor (11,21), **dadurch gekennzeichnet, dass** das Ventilelement (7,19) zumindest im Wesentlichen quer zu der Ventilöffnung (4) verlagerbar ist.

2. Drosselventil nach Anspruch 1, **dadurch gekennzeichnet, dass** das Ventilelement (7,19) als ebene Ventilplatte (8,20) ausgebildet ist.

3. Drosselventil nach einem der vorhergehenden Ansprüche, **dadurch gekennzeichnet, dass** die Ventilplatte (8,20) zumindest im Wesentlichen aus Metall gefertigt ist.

4. Drosselventil nach einem der vorhergehenden Ansprüche, **dadurch gekennzeichnet, dass** die Ventilplatte (8,20) zwischen mindestens zwei Führungswänden gleitend (9,10) gelagert ist.

5. Drosselventil nach einem der vorhergehenden Ansprüche, **dadurch gekennzeichnet, dass** in den Führungswänden (9,10) die Ventilöffnung (4) ausgebildet ist.

6. Drosselventil nach einem der vorhergehenden Ansprüche, **dadurch gekennzeichnet, dass** wenigstens eine der Führungswände (9,10) eine der Ventilplatte (8,20) zugeordnete Polymerschicht aufweist.

7. Drosselventil nach einem der vorhergehenden Ansprüche, **dadurch gekennzeichnet, dass** die Ventilöffnung (4) - in Bewegungsrichtung des Ventilelements (7,19) gesehen - eine konstante Weite aufweist.

8. Drosselventil nach einem der vorhergehenden Ansprüche, **dadurch gekennzeichnet, dass** die Weite der Ventilöffnung - in Bewegungsrichtung des Ventilelements (7,19) gesehen - variiert.

9. Drosselventil nach einem der vorhergehenden Ansprüche, **dadurch gekennzeichnet, dass** dem Piezo-Aktor (11,21) ein zweiter Aktor (18), insbesondere ein Magnet-Aktor, zugeordnet ist.

10. Drosselventil nach einem der vorhergehenden Ansprüche, **gekennzeichnet durch** ein zweites Ventilelement (19), dem ein Piezo-Aktor (21) zugeordnet ist, nach einem oder mehreren der vorhergehenden Ansprüche, zum Freigeben oder Verschließen der Ventilöffnung (4).

11. Drosselventil nach einem der vorhergehenden Ansprüche, **gekennzeichnet durch** mindestens einen Sensor zur Regelung der Stellung des Ventilelements (7,19) in Abhängigkeit eines **durch** den Sensor erfassten Drucks, insbesondere im Niederdruckbereich (3) des Drosselventils (1).

12. Drosselventil nach einem der vorhergehenden Ansprüche, **dadurch gekennzeichnet, dass** die Fläche der Ventilöffnung (4) derart gewählt ist, dass bei minimalem Druck im Hochdruckbereich ein maximal benötigter Massenstrom durch die vollständig freigegebene Ventilöffnung (4) gewährleistet ist.
